# EUROPÄISCHE PATENTSCHRIFT

(11) **EP 3 172 719 B1**
(45) Veröffentlichungstag und Bekanntmachung des Hinweises auf die Patenterteilung: **17.10.2018**
(21) Anmeldenummer: 15741160.4
(22) Anmeldetag: 20.07.2015
(51) Int. Cl.: G06T 11/00, G06T 15/00

(54) **HARDWAREUNABHÄNGIGES ANZEIGEN VON GRAPHISCHEN EFFEKTEN**
HARDWARE-INDEPENDENT DISPLAY OF GRAPHIC EFFECTS
AFFICHAGE, INDÉPENDANT DU MATÉRIEL, D'EFFETS GRAPHIQUES

(30) Priorität: 25.07.2014 DE 102014214666
(43) Veröffentlichungstag der Anmeldung: 31.05.2017
(73) Patentinhaber: Bayerische Motoren Werke Aktiengesellschaft, 80809 München (DE)
(72) Erfinder: VON BEUNINGEN, Sven, 80686 München (DE); CONRAD, Jonathan, 80636 München (DE); ERDEM, Serhat Eser, 80809 München (DE); LOTTERBACH, Timo, 85375 Neufahrn (DE); YANEV, Violin, 80805 München (DE)
(86) Internationale Anmeldenummer: PCT/EP2015/066531
(87) Internationale Veröffentlichungsnummer: WO 2016/012393

(56) Entgegenhaltungen:
- EP-A1- 1 422 667
- WO-A2-2007/005739
- WO-A2-2013/026909
- US-A1- 2005 140 672
- EERO AHO ET AL: "Towards real-time applications in mobile web browsers", EMBEDDED SYSTEMS FOR REAL-TIME MULTIMEDIA (ESTIMEDIA), 2012 IEEE 10TH SYMPOSIUM ON, IEEE, 11. Oktober 2012 (2012-10-11), Seiten 57-66, XP032383725, DOI: 10.1109/ESTIMEDIA.2012.6507030 ISBN: 978-1-4673-4968-0
- Anonymous: "WebGL Specification", , 1. März 2013 (2013-03-01), Seiten 1-33, XP055210248, Gefunden im Internet: URL:https://www.khronos.org/registry/webgl /specs/1.0.2/ [gefunden am 2015-08-31]

## Beschreibung

Die Erfindung betrifft ein Verfahren, ein System und ein Computerprogrammprodukt zum hardwareunabhängigen Anzeigen von graphischen Effekten, insbesondere in einem Fahrzeug.

Es gibt in Fahrzeugen mikroprozessorgesteuerte Systeme, auf denen Anwendungen ausgeführt werden, die dreidimensionale (3d) Bilddaten erzeugen. Dazu baut im Stand der Technik jede Anwendung bzw. Applikation ein separates, so genanntes Szenenmodell auf, das eine dreidimensionale Szene beschreibt. Zur Darstellung der dreidimensionalen Szene auf einer Anzeigeeinheit werden so genannte Renderer eingesetzt. Diese Systeme können ebenfalls auf einem Mikroprozessor, insbesondere auf einem Computer, ausgeführt werden. Sie dienen im Wesentlichen dazu, die dreidimensionalen Bilddaten der dreidimensionalen Szene so zu verarbeiten, dass sie zur Darstellung auf der Anzeigeeinheit angepasst sind.

Im Zuge eines Rendering-Prozesses kann beispielsweise eine Berechnung eines zweidimensionalen Bildes aus einer dreidimensionalen Szene erfolgen. Bei der Umsetzung von dreidimensionalen Bilddaten, kann im Zuge des Rendering-Prozesses beispielsweise eine Konvertierung der dreidimensionalen Darstellung eines Objekts, beispielsweise Polygonnetze, in eine bildpunktweise Pixeldarstellung des Objekts in einer zweidimensionalen (2d) Computergraphik erfolgen.

Ein dreidimensionaler Renderer kann beispielsweise aus jeder einzelnen dreidimensionalen Szene eine separate zweidimensionale Graphik generieren. Mittels einer Steuerungskomponente, einem so genannten Layer-Manager, kann durch Überlagerung verschiedener zweidimensionale Graphiken ein Gesamtbild für die Anzeige auf einer Anzeigeeinheit erzeugt werden. Dabei werden die einzelnen zweidimensionalen Bilder nach einer festen Reihenfolge als Ebenen übereinander gelegt. Inhalte aus einer höheren Ebene können dabei Inhalte aus einer niedrigeren Ebene überdecken. Für die oberste Ebene kann die Sichtbarkeit von deren Inhalten garantiert werden.

Durch eine derartige auf Ebenen basierte Architektur bzw. Datenverarbeitung können dreidimensionale Inhalte von verschiedenen Applikationen auf einem gemeinsamen Display (einer Anzeigeeinrichtung) angezeigt werden. Dabei kann auch sichergestellt werden, dass Inhalte einer sicherheitsrelevanten Applikation auf dem Display dargestellt werden, d.h., dass sie nicht von Inhalten anderer, nicht sicherheitsrelevanter Applikationen überdeckt werden.

Das Darstellen dreidimensionaler Inhalte bedingt eine Interaktion der Inhalte, die beispielsweise Beleuchtungseffekte, Spiegelung, Schattenwurf und dergleichen umfassen. Diese Inhalte können nicht wie die zweidimensionalen Inhalte statisch hinterlegt werden, sondern müssen zur Laufzeit berechnet werden.

Soll ein graphischer Effekt bei unterschiedlichen Geräten bzw. Gerätetypen, beispielsweise Steuergeräten oder Konsumer-Endgeräten, verwendet werden, muss für jedes Gerät ein eigener, d.h. plattformspezifischer, Shader entwickelt werden. Dies erhöht die Entwicklungsaufwände und schränkt die Flexibilität, beispielsweise die Typen von verwendbaren Geräten, stark ein. Bei einem Fahrzeug können dann neu entwickelte Steuergeräte oder ein neues Konsumer-Endgerät nicht verwendet werden, da im Fahrzeug kein Shader für das neue Steuergerät bzw. Konsumer-Endgerät entwickelt wurde. Folglich können bestimmte Inhalte daher nur auf Geräten angezeigt werden, die der Hersteller zur Entwicklungszeit des Fahrzeuges berücksichtigt hat. Dies ist insbesondere nachteilig, wenn neu entwickelte Konsumer-Endgeräte berücksichtigt werden sollen.

Die US 8,289,327 B2 offenbart, dass zur Laufzeit Parameter an einen Shader übergeben werden können.

Die US 2002/0003541 A1 offenbart die Übergabe von Parametern mit einer API an eine Hardwareimplementierung eines Shaders.

Die DE 11 2009 004 418 offenbart einen Shader, der nachgeladen werden kann.

Die DE 10 2009 007 334 A1 offenbart das Nachladen eines Shaders.

In der DE 10 2013 201 377.9, deren Inhalt hiermit per Bezugnahme vollständig aufgenommen wird, ist ein Verfahren und ein Bildverarbeitungssystem offenbart, das dreidimensionale Bildszenen zumindest teilweise überlagert und eine dreidimensionale Gesamtszene bildet. Ferner werden dreidimensionale Ausgabebilddaten gerendert.

In der Veröffentlichung Eero et. al, Towards real-time applications in mobile web browsers, IEEE 2012, ISBN 978-4673-4967-3, Seiten 57 - 66 sind Methoden beschrieben um grafische Darstellungen in mobilen Web-Anwendungen wie z.B. Browser-Anwendungen zu verbessern, insbesondere zu beschleunigen. Dabei wird zudem adressiert, dass die jeweiligen Anwendungen auf verschiedenen Plattformen ausgeführt werden können und dass die Anwendungen auf Geräten mit minimaler Installation und Konfiguration ausführbar sein sollen. Weiterhin soll damit ermöglicht werden, Algorithmen wie z.B. Bildverarbeitungsfilter auszuführen. Im Rahmen der dort gezeigten Methoden werden Systemkomponenten wie ein Webbrowser, und eine CPU mittels Anwendungen der Programmiersprachen JavaScript, WebCL und OpenCL ausgestattet um die Algorithmen auszuführen. Dabei läuft beispielsweise im Webbrowser eine WebCL Anwendung mit einem WebCL-spezifischen API, mittels dessen ein OpenCL host der CPU angesteuert wird. In den jeweiligen Anwendungen können auch Bildverarbeitungsfilter implementiert sein.

Die Erfindung stellt sich zur Aufgabe, ein Verfahren und eine Vorrichtung zu schaffen, die graphische Effekte für eine Vielzahl von elektronischen Geräten erzeugen können.

Die Aufgabe der Erfindung wird durch ein Verfahren nach Anspruch 1, ein Computerprogrammprodukt nach Anspruch 6 und ein Anzeigesystem nach Anspruch 7 gelöst. Die unabhängigen Ansprüche beanspruchen bevorzugte Ausführungsformen.

Ein Verfahren zum Erzeugen eines graphischen Effektes umfasst das Ermitteln eines graphischen Inhaltes, bei dem der graphische Effekt anzuwenden ist und das Berechnen des graphischen Effektes. Erfindungsgemäß wird vereinfacht gesagt ein plattformunabhängiges Modell des berechneten graphischen Effektes zur Laufzeit erzeugt und das plattformunabhängige Modell wird in eine plattformabhängige Darstellung des graphischen Effektes kompiliert bzw. übersetzt. Schließlich wird die plattformabhängige Darstellung des graphischen Effekts auf einer Anzeigeeinrichtung, beispielsweise einer zentralen Anzeigeeinrichtung über den Mitteltunnel eines Fahrzeuges, einem Kombinationsinstrument, das hinter dem Lenkrad angeordnet ist, einer auf die Windschutzscheibe projizierenden Anzeigeeinrichtung, einem Konsumer-Endgerät, angezeigt. Der graphische Inhalt kann ein dreidimensionaler Inhalt sein. Die plattformabhängige Beschreibung des graphischen Effekts kann eine Pixelgraphik sein.

Dadurch ist es möglich, mittels einer abstrakten Hochsprache als Beispiel eines plattformunabhängigen Modells graphische Information für zum Entwicklungszeitpunkt unbekannte Ausgabeeinrichtungen zu schaffen. Die Entwicklung von graphischen Effekten kann ohne spezielles Wissen über die Zielhardware durchgeführt werden. Mittelfristig ergeben sich schnellere Entwicklungszyklen, da nicht jede Zielhardware bei der Entwicklung eines Steuergerätes beachtet werden muss. Ferner kann die Entwicklung auf eine abstraktere Weise erfolgen und es ist nicht bei jeder Entwicklung spezialisiertes Personal für die Effektdarstellung erforderlich. Ferner werden die Nachteile der auf Ebenen basierten Architektur überwunden.

Der Begriff "plattformabhängig" kann als gerätetypabhängig interpretiert werden. Jeder Gerätetyp kann eine unterschiedliche Beschreibung (beispielsweise Anweisungen, Pixeldaten etc.) verwenden, um Bilddaten zu verarbeiten. Ferner können vor dem Anzeigen der plattformabhängigen Darstellung eine Anpassung an ein bestimmtes Geräteindividuum vorgenommen werden, beispielsweise eine RGB-Korrektur, eine Gamma-Korrektur etc.

Das Verfahren umfasst ferner den Schritt des Sendens des plattformunabhängigen Modells an eine Ausgabeeinrichtung, die mit der Anzeigeeinrichtung gekoppelt ist. Der Schritt des Kompilierens des plattformunabhängigen Modells in eine plattformabhängige Darstellung des graphischen Effektes wird in der Ausgabeeinrichtung durchgeführt. Die Ausgabeeinrichtung ist mit einer Mehrzahl von Geräten bzw. Gerätetypen koppelbar, um graphische Inhalte mit grafischen Effekten darzustellen.

Der Schritt des Erzeugens des plattformunabhängigen Modells des berechneten graphischen Effektes zur Laufzeit kann durch ein Steuergerät eines Fahrzeuges, ein mobiles Konsumer-Endgerät, ein Mobiltelefon, einen Computer, einen mobilen Computer, einen Tablet-Computer, einen zentralen Server und dergleichen durchgeführt werden. Diese Geräte, die mit der Ausgabeeinrichtung koppelbar sind, kommunizieren mit der Ausgabeeinrichtung über ein fahrzeuginternes Netzwerk oder ein Funknetzwerk, beispielsweise Bluetooth. Die Anzeigeeinrichtung kann von einer Mehrzahl von Geräten graphische Inhalte ausgeben. Es ist aber auch möglich, dass die Anzeigeeinrichtung in einem mobilen Konsumer-Endgerät, einem Mobiltelefon, einem mobilen Computer, einem Tablet-Computer oder dergleichen implementiert ist, so dass diese Geräte graphische Inhalte wiedergeben können, die durch das Fahrzeug erzeugt werden.

Der graphische Effekt kann einen Beleuchtungseffekt, einen Schatteneffekt, einen Spiegeleffekt, eine Unschärfe, eine Transparenz, eine Semitransparenz, ein Anordnen von Teilszenen des graphischen Inhaltes hintereinander bzw. übereinander umfassen. Es sind beliebige weitere Effekte möglich.

Das plattformunabhängige Modell kann maschinenunabhängig sein, Datenstrukturen verwenden, maschinenunabhängige Datentypen verwenden und maschinenunabhängige Anweisungen verwenden. Derartige Kriterien für ein plattformunabhängiges Modell, beispielsweise für eine Hochsprache, sind dem Fachmann bekannt und müssen hierin nicht näher ausgeführt werden. Das plattformunabhängige Modell kann eine maschinenunabhängige Beschreibung des graphischen Effektes verwenden. Dadurch kann sichergestellt sein, dass der graphische Inhalt und der graphische Effekt auf einer Vielzahl von Endgeräten und Anzeigeeinrichtungen dargestellt werden kann. Das plattformunabhängige Modell kennzeichnet sicherheitsrelevante graphische Inhalte. Die Anzeigeeinrichtung bzw. das Endgerät können diese sicherheitsrelevanten Inhalte anders verarbeiten als nicht sicherheitsrelevante Inhalte. Ein sicherheitsrelevanter graphischer Inhalt kann eine Warnung über eine Fehlfunktion der Bremsen, eine Warnung hinsichtlich des Ölstandes, des Öldruckes, des Reifendruckes oder dergleichen sein.

Das plattformunabhängige Modell bzw. die Hochsprache kann Modelle mit einer abstrakten Beschreibung eines Effektes aufweisen. Dadurch kann auch ein NichtFachmann auf dem Gebiet der Implementierung von graphischen Effekten graphische Effekte erzeugen. Die Hochsprache bzw. das plattformunabhängige Modell kann für zumindest zwei graphische Effekte ein unterschiedliches Modell verwenden. Die Modelle können beliebig miteinander kombiniert werden. Vorzugsweise gibt es für jeden graphischen Effekt ein separates Modell. Dadurch kann ein Entwickler einer Benutzeroberfläche und dergleichen auf einer Vielzahl von Endgeräten nahezu beliebige graphische Effekte erzeugen.

Nach dem Schritt des Kompilierens des plattformunabhängigen Modells in eine plattformabhängige Beschreibung des graphischen Effektes kann ein dreidimensionalen graphischen Inhalt, der den graphischen Effekt umfasst, in eine zweidimensionale Darstellung umgewandelt werden, die auf einer zweidimensionalen Anzeigeeinrichtung dargestellt wird. Dieser Vorgang wird auch als Rendern bezeichnet.

Der graphische Inhalt kann zumindest ein Element einer Bedienoberfläche eines Computerprogrammes, die gesamte Bedienoberfläche eines Computerprogrammes, ein Symbol, ein Piktogramm, eine Darstellung zumindest einer Komponente eines Fahrzeuges, eine Darstellung zumindest eines Objektes außerhalb des Fahrzeuges, eine Navigationskarte oder dergleichen aufweisen. Die genannten Inhalte können dreidimensional sein. Der graphische Inhalt kann beliebige Objekte umfassen, die durch ein Polygonnetz, eine Vektorgraphik oder eine andere Geometriebeschreibung definiert sind.

Die Erfindung betrifft auch ein Computerprogrammprodukt, das, wenn es in einen Speicher zumindest eines Computers geladen ist, die Schritte des zuvor beschriebenen Verfahrens ausführt.

Die Erfindung betrifft vereinfacht gesagt auch ein Anzeigesystem, das dazu ausgebildet ist, graphische Inhalte auf einer Anzeigeeinrichtung in einem Fahrzeug anzuzeigen. Das Anzeigesystem umfasst eine Ausgabeeinrichtung, die mit einer elektronischen Einrichtung koppelbar ist. Die elektronische Einrichtung ist dazu ausgebildet, einen graphischen Inhalt zu ermitteln, bei dem ein graphischer Effekt anzuwenden ist. Die elektronische Einrichtung kann den graphischen Effekt berechnen. Erfindungsgemäß erzeugt die elektronische Einrichtung ein plattformunabhängiges Modell des berechneten graphischen Effektes zur Laufzeit. Die Ausgabeeinrichtung ist dazu ausgebildet, das plattformunabhängige Modell in eine plattformabhängige Darstellung des graphischen Effektes zu kompilieren und die plattformabhängige Darstellung des graphischen Effekts auf einer Anzeigeeinrichtung darzustellen. Das Anzeigesystem kann so weiter gebildet sein, wie zuvor hinsichtlich des Verfahrens beschrieben wurde.

Die Ausgabeeinrichtung muss nicht notwendigerweise durch das Fahrzeug implementiert sein. Die Ausgabeeinrichtung kann durch ein mobiles Konsumer-Endgerät, ein Mobiltelefon, einen Computer, einen mobilen Computer implementiert sein, die einen graphischen Inhalt darstellt, der mit Mitteln des Fahrzeuges erzeugt wurde.

Beispielsweise umfasst die elektronische Einrichtung ein Steuergerät eines Fahrzeuges, ein mobiles Konsumer-Endgerät, ein Mobiltelefon, einen mobilen Computer, einen Tablet-Computer oder dergleichen.

Die Erfindung wird nun unter Bezugnahme auf die Figuren detaillierter erläutert, die eine nicht-beschränkende Ausführungsform der vorliegenden Erfindung zeigen, wobei gilt:
Figur 1 ist eine schematische Darstellung ausgewählter Komponenten eines elektronischen Systems eines Fahrzeuges;
Figur 2 ist ein schematisches Diagramm des erfindungsgemäßen Verfahrens; und
Figur 3 ist ein Beispiel eines plattformunabhängigen Modells.

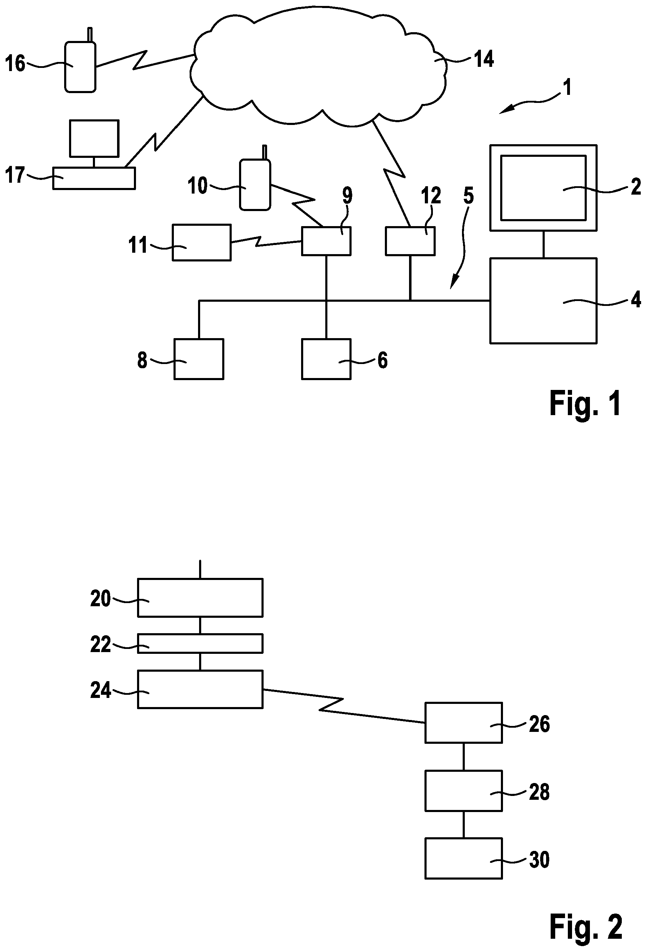

Figur 1 zeigt einen Teil eines elektronischen Systems 1 eines Fahrzeuges. Das Fahrzeug umfasst eine Anzeigeeinrichtung, beispielsweise einen Bildschirm, ein Kombinationsinstrument, das hinter einem Lenkrad angeordnet ist, eine zentrale Anzeigeeinrichtung, die über einem Mitteltunnel des Fahrzeuges angeordnet ist, eine auf die Windschutzscheibe projizierende Anzeigeeinrichtung (Head-Up-Display) oder dergleichen. An die Anzeigeeinrichtung 2 ist eine Ausgabeeinrichtung 4 angeschlossen. Die Ausgabeeinrichtung 4 kann für eine Mehrzahl elektronischer Geräte in dem Fahrzeug Inhalte aufbereiten, die auf der Anzeigeeinrichtung 2 angezeigt werden. Die Mehrzahl elektronischer Einrichtungen ist über einen Bus 5 an die Ausgabeeinrichtung 4 angeschlossen.

Das Fahrzeug umfasst eine Überwachungseinrichtung 6, die beispielsweise den Ölstand, den Öldruck, den Reifendruck, die Kühlmitteltemperatur oder dergleichen überwacht. Sobald eine Warnung auf der Anzeigeeinrichtung 2 ausgegeben werden muss, überträgt die Warneinrichtung 6 einen graphischen Inhalt, der ein Symbol und optional Bedienelemente umfassen kann, an die Ausgabeeinrichtung 4. Die Ausgabeeinrichtung 4 stellt den graphischen Inhalt auf der Anzeigeeinrichtung 2 dar. Das Fahrzeug umfasst ferner eine Unterhaltungseinrichtung 8, die ein Radio, eine Musikwiedergabesystem oder dergleichen umfassen kann. Die Unterhaltungseinrichtung 8 kann zur Bedienung der Unterhaltungseinrichtung 8 notwendige graphische Inhalte, die auch Symbole und optionale Bedienelemente umfassen, an die Ausgabeeinrichtung 4 ausgeben, die die graphischen Inhalte auf der Anzeigeeinrichtung 2 darstellt.

Das Fahrzeug umfasst eine erste Koppeleinrichtung 9, mit der ein Mobiltelefon 10 und/oder ein mobiler Computer 11, beispielsweise ein Tablet-Computer, gekoppelt werden können. Das Mobiltelefon 10 und/oder der mobile Computer 11 können über die Koppeleinrichtung 9 und die Ausgabeeinrichtung 4 graphische Inhalte auf der Anzeigeeinrichtung 2 ausgeben. Das Mobiltelefon 10 und/oder der mobile Computer 11 können mittels eines Funknetzes, beispielsweise Bluetooth, mit der Koppeleinrichtung 9 gekoppelt sein.

Es ist aber auch möglich, dass eine interne Einrichtung des Fahrzeuges, beispielsweise die Überwachungseinrichtung 6 und/oder die Unterhaltungseinrichtung 8 über die Koppeleinrichtung 9 einen graphischen Inhalt auf dem Mobiltelefon 10 und/oder auf dem mobilen Computer 11 ausgeben.

Ferner können ein zweites Mobiltelefon 16, das sich außerhalb des Fahrzeuges befindet, und ein Computer 17, der sich außerhalb des Fahrzeuges befindet, über ein Netzwerk 14, beispielsweise ein Mobilfunknetzwerk, mit einer zweiten Koppeleinrichtung 12 des Fahrzeuges 1 gekoppelt sein. Eine elektronische Einrichtung innerhalb des Fahrzeuges kann graphische Inhalte auf einer elektronischen Einrichtung außerhalb des Fahrzeuges darstellen. Es ist aber auch möglich, dass eine elektronische Einrichtung außerhalb des Fahrzeuges einen graphischen Inhalt auf der Anzeigeeinrichtung 2 mittels der Ausgabeeinrichtung 4 darstellt.

Beispielsweise kann die Überwachungseinrichtung 6 über die zweite Koppeleinrichtung 12 und das Mobilfunknetzwerk einen graphischen Inhalt auf einem Mobiltelefon 16 oder einen Computer 17, die sich außerhalb des Fahrzeuges befinden, darstellen. Diese Information kann beispielsweise eine Warnung über einen zu niedrigen Füllstand eines Betriebsstoffes umfassen. Es ist aber auch möglich, dass ein Computer 17, der sich außerhalb des Fahrzeuges befindet oder ein Mobiltelefon 16, das sich außerhalb des Fahrzeuges befindet, über das Netzwerk 14 und die zweite Koppeleinrichtung 12 mittels der Ausgabeeinrichtung 4 eine graphische Information auf der Anzeigeeinrichtung 2 darstellt.

Die Arbeitsweise der Erfindung wird durch zusätzliche Bezugnahme auf Figur 2 ausführlich erläutert. In einem Schritt 20 wird ermittelt, ob ein graphischer Inhalt vorhanden ist, bei dem ein graphischer Effekt anzuwenden ist. Mittels eines geeigneten Kommunikationsmechanismus, beispielsweise einer Intra-Prozess-Kommunikation, einer Inter-Prozess-Kommunikation oder dergleichen, können Daten übergeben werden, bei denen der graphischer Effekt anzuwenden ist.

In einem Schritt 22 wird der graphische Effekt berechnet. Dieser Schritt kann beispielsweise das Erzeugen von geeigneten Parametern für die Darstellung des graphischen Effektes umfassen. In einem Schritt 24 wird ein plattformunabhängiges Modell des graphischen Effektes zur Laufzeit erzeugt. Das plattformunabhängige Modell kann eine maschinenunabhängige Beschreibung des graphischen Effektes umfassen. Das plattformunabhängige Modell kann sicherheitsrelevante graphische Inhalte kennzeichnen. Das plattformunabhängige Modell kann ein Modell mit einer abstrakten Beschreibung eines Effektes umfassen. Das plattformunabhängige Modell kann für unterschiedliche Effekte unterschiedliche Modelle verwenden, wobei die Modelle miteinander kombiniert werden können.

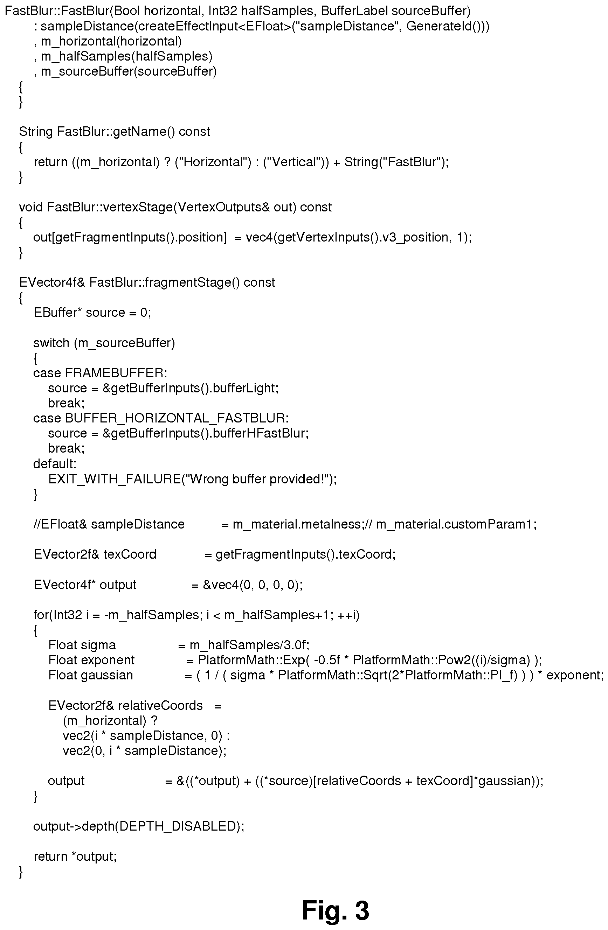

Das plattformunabhängige Modell kann beispielsweise wie eine Hochsprache zum Darstellen des graphischen Inhaltes so ausgebildet sein, wie in Fig 3 gezeigt ist.

Der in Figur 3 mittels Pseudo-Code beschriebene Effekt kann eine Unschärfe, beispielsweise einem sogenannten "Blur", implementieren. Die Methoden "fragmentStage und vertexStage" sind wesentliche Bestandteile zum Erzeugen der Unschärfe. Die in Figur 3 dargestellten Operationen hinsichtlich normaler Datentypen, beispielsweise "float" (Gleitkommazahl) sind Werte, die bei einer Instanziierung einer jeweiligen Klasse lokal vorberechnet werden. Alle Datentypen, die mit "E" anfangen, beispielsweise EVector4 sind Datentypen, die erst in der Graphikhardware berechnet werden können.

Die Schritte 20 bis 24 können von einer Einrichtung innerhalb des Fahrzeuges, die im Fahrzeug fest eingebaut ist oder durch einen Anwender als mobiles Gerät in das Fahrzeug während der Nutzung des Fahrzeuges gebracht wird, ausgeführt werden. Die Schritte 20 bis 24 können aber auch von einer elektronischen Einrichtung außerhalb des Fahrzeuges ausgeführt werden, die beispielsweise eine Unwetterwarnung im Fahrzeug anzeigen sollen.

Das im Schritt 24 erzeugte plattformunabhängige Modell des graphischen Effektes wird an die Ausgabeeinrichtung 4 oder an ein Mobiltelefon 10 innerhalb des Fahrzeuges, einen mobilen Computer 11 innerhalb des Fahrzeuges, ein Mobiltelefon 16 außerhalb des Fahrzeuges und/oder an einen Computer 17 außerhalb des Fahrzeuges übertragen. Dort werden die Schritte 26 bis 30 durchgeführt. Im Schritt 26 wird das plattformunabhängige Modell des graphischen Effektes in eine plattformabhängige Beschreibung des graphischen Effektes umgewandelt, kompiliert bzw. übersetzt. Die Funktionsweise eines Kompilers bzw. Übersetzers sind dem Fachmann bekannt und muss hierin nicht näher beschrieben werden.

Im Schritt 28 wird eine dreidimensionale Information mit dem graphischen Effekt in eine zweidimensionale Darstellung umgewandelt, um auf einer zweidimensionalen Anzeigeeinrichtung 2 oder einem Endgerät 10, 11, 16, 17 mit einer zweidimensionalen Anzeigeeinrichtung (Bildschirm) angezeigt zu werden. Dies wird auch als Rendern bezeichnet.

Im Schritt 30 wird die zweidimensionale Information auf der Anzeigeeinrichtung 2 oder auf einem mobilen Endgerät 10, 11, 16, 17 dargestellt.

Die Ausgabeeinrichtung 2 muss nicht notwendigerweise durch das Fahrzeug implementiert sein. Die Ausgabeeinrichtung kann durch ein mobiles Konsumer-Endgerät, ein Mobiltelefon, einen Computer, einen mobilen Computer implementiert sein, die einen graphischen Inhalt darstellt, der mit Mitteln des Fahrzeuges erzeugt wurde.

Die Erfindung hat den Vorteil, dass Effekte entwickelt und erzeugt werden können, ohne die Zielhardware zu berücksichtigen und ohne dass spezielle Kenntnisse der Zielhardware erforderlich sind. Dadurch ergeben sich schnellere Entwicklungszyklen, da bei der Implementierung die Zielhardware weniger stark betrachtet werden muss. Eine höhere Abstrahierung der Effekte ermöglicht, dass weniger spezialisiertes Personal Effekte implementieren kann. Ferner können automatisiert Effekte je nach Eigenschaften der Zielhardware zusammengefasst werden, um die Performanz zu erhöhen.

## Patentansprüche

1. Computerimplementiertes Verfahren zum Erzeugen eines graphischen Effekts mit den folgenden Schritten:
- Ermitteln eines graphischen Inhaltes, bei dem der graphische Effekt anzuwenden ist (20);
- Berechnen des graphischen Effektes (22), wobei geeignete Parameter für die Darstellung des graphischen Effektes erzeugt werden,
- Erzeugen eines plattformunabhängigen Modells des berechneten graphischen Effektes zur Laufzeit (24);
- Kompilieren des plattformunabhängigen Modells in eine plattformabhängige Darstellung des graphischen Effektes (26);
- Anzeigen der plattformabhängigen Darstellung des graphischen Effektes auf einer Anzeigeeinrichtung (30); und
- Senden des plattformunabhängigen Modells an eine Ausgabeeinrichtung, die mit der Anzeigeeinrichtung gekoppelt ist;
wobei der Schritt des Kompilierens des plattformunabhängigen Modells in eine plattformabhängige Darstellung des graphischen Effektes in der
Ausgabeeinrichtung durchgeführt wird,
wobei der Schritt des Erzeugens des plattformunabhängigen Modells des
berechneten graphischen Effektes zur Laufzeit durch zumindest einem von Folgendem durchgeführt wird:
- einem Steuergerät eines Fahrzeuges (6, 8);
- einem mobilen Konsumer-Endgerät (10, 11, 16);
- einem Mobiltelefon (10, 16);
- einem Computer (11, 17);
- einem mobilen Computer (11, 17);
- einem Tablet-Computer (11)
- einem zentralen Server (17).

2. Computerimplementiertes Verfahren nach Anspruch 1, **dadurch gekennzeichnet, dass** der graphische Effekt zumindest einen der folgenden Effekte umfasst:
- einen Beleuchtungseffekt;
- einen Schatteneffekt;
- einen Spiegeleffekt;
- eine Unschärfe;
- eine Transparenz;
- eine Semitransparenz;
- eine Anordnung von Teilszenen des graphischen Inhaltes hintereinander bzw. übereinander.

3. Computerimplementiertes Verfahren nach Anspruch 1 oder 2, **dadurch gekennzeichnet, dass** das plattformunabhängige Modell eines von folgenden Kriterien aufweist:
- das plattformunabhängige Modell ist maschinenunabhängig;
- das plattformunabhängige Modell verwendet Datenstrukturen;
- das plattformunabhängige Modell verwendet maschinenunabhängige Datentypen;
- das plattformunabhängige Modell verwendet maschinenunabhängige Anweisungen;
- das plattformunabhängige Modell verwendet eine maschinenunabhängige Beschreibung des graphischen Effektes;
- das plattformunabhängige Modell kennzeichnet sicherheitsrelevante graphische Inhalte;
- das plattformunabhängige Modell verwendet Modelle mit einer abstrakten Beschreibung eines graphischen Effektes;
- das plattformunabhängige Modell verwendet für zumindest zwei graphische Effekte ein unterschiedliches Modell, wobei die Modelle miteinander kombiniert werden können.

4. Computerimplementiertes Verfahren nach einem der Ansprüche 1 bis 3, **dadurch gekennzeichnet, dass** nach dem Schritt des Kompilierens des plattformunabhängigen Modells in eine plattformabhängige Darstellung des graphischen Effektes (26) folgender Schritt ausgeführt wird:
- Umwandeln eines dreidimensionalen graphischen Inhalts in eine zweidimensionale Darstellung, die auf der Anzeigeeinrichtung dargestellt wird (28).

5. Computerimplementiertes Verfahren nach einem der Ansprüche 1 bis 4, **dadurch gekennzeichnet, dass** der graphische Inhalt zumindest eines von Folgendem umfasst:
- zumindest ein Element einer Bedienoberfläche eines Computer-Programmes;
- die gesamte Benutzeroberfläche eines Computer-Programmes
- ein Symbol;
- ein Piktogramm;
- eine Darstellung zumindest einer Komponente eines Fahrzeuges;
- eine Darstellung zumindest eines Objektes außerhalb des Fahrzeuges;
- eine Navigationskarte.

6. Computerprogrammprodukt, das, wenn es in einen Speicher zumindest eines Computers geladen wird, die Schritte des Verfahrens nach einem der Ansprüche 1 bis 5 ausführt.

7. Anzeigesystem, das dazu ausgebildet ist, graphische Inhalte auf einer Anzeigeeinrichtung in einem Fahrzeug anzuzeigen, mit
- einer Ausgabeeinrichtung (4), die mit einer elektronischen Einrichtung (6, 8, 9, 10, 11, 12, 16, 17) koppelbar ist,
- wobei die elektronische Einrichtung (6, 8, 9, 10, 11, 12, 16, 17) dazu ausgebildet ist, einen graphischen Inhalt zu ermitteln, bei dem ein graphischer Effekt anzuwenden ist, den graphischen Effekt zu berechnen, wobei geeignete Parameter für die Darstellung des graphischen Effektes erzeugt werden, und ein plattformunabhängiges Modell des graphischen Effektes des berechneten graphischen Effektes zur Laufzeit zu erzeugen, und
- wobei die Ausgabeeinrichtung (4) dazu ausgebildet ist, das plattformunabhängige Modell in eine plattformabhängige Darstellung des graphischen Effektes zu kompilieren und die plattformabhängige Darstellung des graphischen Effekts auf einer Anzeigeeinrichtung darzustellen,
wobei die elektronische Einrichtung zumindest eines von Folgendem umfasst:
- ein Steuergerät eines Fahrzeuges (6, 8);
- ein mobiles Konsumer-Endgerät (10, 16);
- ein Mobiltelefon (11, 17);
- einem Computer (11, 17);
- einen mobilen Computer (11, 17);
- einen Tablet-Computer (11).

## Claims

1. A computer-implemented method for generating a graphic effect, the method comprising the following steps:
- determining a graphic content in which the graphic effect is to be used (20);
- calculating the graphic effect (22), wherein suitable parameters for the representation of the graphic effect are generated;
- generating a platform-independent model of the calculated graphic effect at run time (24);
- compiling the platform-independent model into a platform-dependent representation of the graphic effect (26);
- displaying the platform-dependent representation of the graphic effect on a display device (30); and
- transmitting the platform-independent model to an output device which is coupled to the display device;
wherein the step of compiling the platform-independent model into a platform-dependent representation of the graphic effect is carried out in the output device,
wherein the step of generating the platform-independent model of the calculated graphic effect at run time is carried out by at least one of the following:
- a control device of a vehicle (6, 8);
- a mobile consumer terminal (10, 11, 16);
- a mobile telephone (10, 16);
- a computer (11, 17);
- a mobile computer (11, 17);
- a tablet computer (11); or
- a central server (17).

2. A computer-implemented method according to claim 1, **characterised in that** the graphic effect comprises at least one of the following effects:
- a lighting effect;
- a shadow effect;
- a mirror effect;
- blurring;
- transparency;
- semi-transparency; or
- an arrangement of partial scenes of the graphic content behind or above one another.

3. A computer-implemented method according to claim 1 or 2, **characterised in that** the platform-independent model has one of the following criteria:
- the platform-independent model is machine-independent;
- the platform-independent model uses data structures;
- the platform-independent model uses machine-independent data types;
- the platform-independent model uses machine-independent instructions;
- the platform-independent model uses a machine-independent description of the graphic effect;
- the platform-independent model indicates safety-relevant graphic contents;
- the platform-independent model uses models with an abstract description of a graphic effect; or
- the platform-independent model uses a different model for at least two graphic effects, the models being able to be combined with one another.

4. A computer-implemented method according to any one of claims 1 to 3, **characterised in that**, after the step of compiling the platform-independent model into a platform-dependent representation of the graphic effect (26), the following step is carried out:
- converting a three-dimensional graphic content into a two-dimensional representation which is displayed on the display device (28).

5. A computer-implemented method according to any one of claims 1 to 4, **characterised in that** the graphic content comprises at least one of the following:
- at least one element of a user interface of a computer program;
- the entire user interface of a computer program;
- a symbol;
- a pictogram;
- a representation of at least one component of a vehicle;
- a representation of at least one object outside the vehicle;
- a navigation map.

6. A computer program product which, when loaded into a memory of at least one computer, carries out the steps of the method according to any one of claims 1 to 5.

7. A display system which is designed to display graphic contents on a display device in a vehicle, comprising:
- an output device (4) which can be coupled to an electronic device (6, 8, 9, 10, 11, 12, 16, 17),
- wherein the electronic device (6, 8, 9, 10, 11, 12, 16, 17) is designed to determine a graphic content in which a graphic effect is to be used, to calculate the graphic effect, wherein suitable parameters for the representation of the graphic effect are generated, and to generate a platform-independent model of the graphic effect of the calculated graphic effect at run time, and
- wherein the output device (4) is designed to compile the platform-independent model into a platform-dependent representation of the graphic effect and to display the platform-dependent representation of the graphic effect on a display device,
wherein the electronic device comprises at least one of the following:
- a control device of a vehicle (6, 8);
- a mobile consumer terminal (10, 16);
- a mobile telephone (11, 17);
- a computer (11, 17);
- a mobile computer (11, 17); or
- a tablet computer (11).

## Revendications

1. Procédé assisté par ordinateur permettant d'obtenir un effet graphique comprenant les étapes suivantes, consistant à :
- déterminer un contenu graphique dans lequel l'effet graphique doit être utilisé (20),
- calculer l'effet graphique (22), des paramètres adaptés pour la représentation de l'effet graphique étant créés,
- créer un modèle indépendant de plateforme de l'effet graphique calculé pendant la durée d'exécution (24),
- compiler le modèle indépendant de la plateforme en une représentation dépendant de la plateforme de l'effet graphique (26),
- afficher la représentation dépendant de la plate forme de l'effet graphique sur un dispositif d'affichage (30), et
- transmettre le modèle indépendant de la plate forme à un dispositif de sortie qui est couplé au dispositif d'affichage,
- l'étape consistant à compiler le modèle indépendant de la plate forme en une représentation dépendant de la plate forme de l'effet graphique étant mise en oeuvre dans le dispositif de sortie,
l'étape consistant à créer le modèle indépendant de la plate forme de l'effet graphique calculé pendant la durée d'exécution étant mise en oeuvre par au moins l'un des éléments suivants :
- un appareil de commande d'un véhicule (6, 8),
- un terminal de consommateur mobile (10, 11, 16),
- un téléphone mobile (10, 16),
- un ordinateur (11, 17),
- un ordinateur mobile (11, 17),
- une tablette d'ordinateur (11),
- un serveur central (17).

2. Procédé assisté par ordinateur, conforme à la revendication 1, **caractérisé en ce que**
l'effet graphique comporte au moins l'un des effets ci-dessous :
- un effet d'éclairage,
- un effet d'ombre,
- un effet de miroir,
- un flou,
- une transparence,
- une semi transparence,
- un dispositif de scènes partielles du contenu graphique successives ou superposées.

3. Procédé assisté par ordinateur, conforme à la revendication 1 ou 2, **caractérisé en ce que**
le modèle indépendant de la plate forme comporte l'un des critères suivants :
- le modèle indépendant de la plate forme est indépendant de la machine,
- le modèle indépendant de la plate forme utilise des structures de données,
- le modèle indépendant de la plate forme utilise des types de données indépendants de la machine,
- le modèle indépendant de la plate forme utilise des instructions indépendantes de la machine,
- le modèle indépendant de la plate forme utilise une description indépendante de la machine de l'effet graphique,
- le modèle indépendant de la plate forme caractérise des contenus graphiques liés à la sécurité,
- le modèle indépendant de la plate forme utilise des modèles avec une description abstraite d'un effet graphique,
- le modèle indépendant de la plate forme utilise un modèle différent pour au moins deux effets graphiques, les modèles pouvant être combinés.

4. Procédé assisté par ordinateur, conforme à l'une des revendications 1 à 3,
**caractérisé en ce qu'**
après l'étape consistant à compiler le modèle indépendant de la plateforme en une représentation dépendant de la plateforme de l'effet graphique (26), l'étape suivante est mise en oeuvre :
- transformer un contenu graphique tridimensionnel en une représentation bidimensionnelle qui est représentée sur le dispositif d'affichage (28).

5. Procédé assisté par ordinateur, conforme à l'une des revendications 1 à 4,
**caractérisé en ce que**
le contenu graphique comporte au moins l'un des éléments suivants :
- au moins un élément d'une interface de commande d'un programme d'ordinateur,
- la totalité de l'interface de commande d'un programme d'ordinateur,
- un symbole,
- un pictogramme,
- une représentation d'au moins un composant d'un véhicule,
- une représentation d'au moins un objet situé à l'extérieur du véhicule,
- une carte de navigation.

6. Produit programme d'ordinateur qui, lorsqu'il est chargé dans la mémoire d'au moins un ordinateur exécute les étapes du procédé conforme à l'une des revendications 1 à 5.

7. Système d'affichage, réalisé pour permettre d'afficher des continues graphiques sur un dispositif d'affichage dans un véhicule comprenant :
- un dispositif de sortie (4) susceptible d'être couplé à un dispositif électronique (6, 8, 9, 10, 11, 12, 16,17),
- le dispositif électronique (6, 8, 9, 10, 11, 12, 16, 17) étant réalisé pour permettre de déterminer un contenu graphique dans lequel un effet graphique doit être utilisé, de calculer l'effet graphique, un paramètre adapté à la représentation de l'effet graphique étant créé, et de créer un modèle indépendant de la plateforme de l'effet graphique, de l'effet graphique calculé pendant la durée d'exécution,
- le dispositif de sortie (4) étant réalisé pour permettre de compiler le modèle indépendant de la plateforme en une représentation dépendant de la plateforme de l'effet graphique, et de représenter la représentation dépendant de la plateforme de l'effet graphique sur un dispositif d'affichage,
le dispositif électronique comprenant au moins l'un des éléments suivants :
- un appareil de commande d'un véhicule (6, 8),
- un terminal mobile d'un consommateur (10, 16),
- un téléphone mobile (11, 17),
- un ordinateur (11, 17),
- un ordinateur mobile (11, 17),
- une tablette d'ordinateur (11).
